# EUROPEAN PATENT SPECIFICATION

(11) **EP 3 374 569 B1**
(45) Date of publication and mention of the grant of the patent: **25.12.2019**
(21) Application number: 15832951.6
(22) Date of filing: 29.12.2015
(51) Int. Cl.: E02B 3/04, A01K 61/00

(54) **ARTIFICIAL REEF FOR RECREATIONAL DIVING**
KÜNSTLICHE RIFFANLAGE ZUM SPORTTAUCHEN
RÉCIF ARTIFICIEL POUR PLONGÉE RÉCRÉATIVE

(30) Priority: 11.11.2015 GR 20150100490
(43) Date of publication of application: 19.09.2018
(73) Proprietor: Dounas, Konstantinos, 71003 Heraklion Crete (GR); Hellenic Center For Marine Research (HCMR), 190 13 Anavissos Attikis (GR)
(72) Inventor: DOUNAS, Konstantinos, 71003 HERAKLION CRETE (GR)
(86) International application number: PCT/GR2015/000065
(87) International publication number: WO 2017/081495

(56) References cited:
- US-A1- 2011 067 642
- US-B1- 7 513 711
- US-B1- 7 827 937

## Description

### THE FIELD OF THE ART

The invention relates to an artificial reef constructed so as to simulate a natural reef through providing a corresponding plurality and heterogeneity of microhabitats and refuges for benthic and benthopelagic species and to a technical process for the production of such artificial reefs with a form and aesthetics similar to those of natural reefs and a structure that allows their handy launching and mounting onto the seabed. Further the invention relates to artificial underwater ecotourism attractions or artificial oases for recreational diving, made up of a cluster of a predetermined plurality of artificial reefs adapted to determine one or more diving trails.

### THE BACKGROUND OF THE INVENTION

Ecotourism as an economic activity requires efficient management and planning in order to prevent negative environmental impacts. It is generally acknowledged that most ecotourism products are eventually consumed by mass or soft ecotourists whose non-ecological behavior during their stay in a tourist destination might be detrimental to the local environment and society. As a result the development of ecotourism in environmentally sensitive areas continues to disrupt the ecological balance and has negative effects on the populations of species of local wildlife that inevitably lead to loss of biodiversity. The establishment of specific artificially modified small areas for the concentration of mass ecotourism is one of the strategies that have been developed to tackle this problem. Inasmuch as this category of soft ecotourists represents the vast majority of visitors, their concentration within such artificially modified small areas enables a more efficient management of neighboring natural areas of high ecological value wherein access is provided to a minority of environmentally conscious visitors (hard ecotourists).

Accordingly, the growth of marine tourism has resulted in an ever increasing environmental pressure and a decrease in biodiversity mainly apparent in destinations with a particular diving interest. These negative effects are due to the presence of divers themselves as they dive on natural reefs either with an autonomous diving apparatus (SCUBA divers) or using an observation mask and snorkel (snorkelers). It has been verified through direct observations in the field that almost in each recreational diving numerous incidents of deliberate or unconscious contacts of the divers with sensitive marine organisms are being recorded, such incidents cumulatively resulting in the injury or killing of many of those organisms. This continued negative impact of visiting divers gradually leads to a degradation of the ecosystem that might locally even result in the total destruction thereof. The degradation of many underwater diving destinations because of the massive marine tourism necessitates the adoption of management measures aiming at decongesting visits, such as the reduction of the number of diving and the diverting of a portion of visitors from sensitive marine natural areas of high ecological and aesthetic value.

One of the solutions being provided to address the problem is the creation of artificial underwater ecotourism attractions using specially constructed artificial reefs attempting to simulate the functional and morphological characteristics of the sublittoral rocky substrata, known as natural reefs. The artificial reefs are deployed onto the seabed within the borders of specially designated areas with the main operational objective of increasing abundance, biomass and diversity of local natural biological resources in order to attract visitors-divers interested in diving through underwater routes amid a complex of such artificial structures.

The review of the literature relating to the typology of artificial reefs that have been used so far to serve entertainment-ecotourism purposes on the basis of their physical appearance beneath the sea surface and the materials of construction thereof (Stolk et al 2015. Journal of Sustainable Tourism, 15:4, 331-350), classifies them into the following general categories:
a) Artificial reefs that arise from the conversion of use of human constructions, e.g. old ships, airplanes, cars, other waste means of transport, etc.
b) Artificial reefs functionally similar to natural reefs, which are however significantly distant from an accurate simulation of the form and aesthetics of natural reefs, e.g. prefabricated units made of metal, concrete, motor car tires, etc., or from syntheses of these materials. These constructions are usually mass produced and are formulated in various geometrical shapes, such as pyramids, hemispheres, domes, rectangular blocks, etc., and
c) Artificial reefs that attempt to simulate natural reefs through emulating the function, form and aesthetics of the latter.

A large portion of public opinion and mainly of the visitors of the underwater areas with artificial reefs having aesthetics and form far distant from those of natural reefs, as in categories (a) and (b) hereinabove, reject these forms of intervention in the natural environment. Some even believe that this practice is a pretense and in reality it is nothing more than a practice of polluting the seabed through the disposal or even the deliberate concealment of "trash" therein.

Two types of artificial reefs are classified in the third hereinabove category attempting to emulate the function and at the same time the aesthetics and form of natural reefs.

The first type relates to a method of electrolysis of seawater, as disclosed by HILLERTZ and GOREAU in US-5,543,034, by means of applying electric current of low voltage that causes a gradual deposition of salts, e.g. calcium carbonate onto wire meshes placed in selected areas of the seabed. The deposition of layers of salt onto these meshes allows habitation of various benthic species, mainly colonies of hard corals, thereby formulating coral reefs. It should however be noted that this method has certain drawbacks that have substantially prevented its implementation at a wide range. Drawbacks of this method include the requirement of maintaining the electric field necessary for the electrolysis of water and the gradual deposition of an adequate layer of salts onto the wire meshes for long periods. As a result significant technical problems are often observed in the power plants and in the electric current transmission facilities, whilst a partial or total destruction of these facilities might occur due to extreme weather conditions or due to other causes, such as the passage or anchoring of vessels, etc. Another serious drawback is that the nascent coral reefs maintain the anthropogenic form of the wire meshes being employed, thereby ultimately producing an aesthetic effect which is significantly distant from that of a natural reef.

The second type relates to the use of natural rocks or of boulders of quarries transported from land locations and deployed onto the seabed to form irregular piles of various dimensions. It has been demonstrated that such formations are practically quite functional, but at the same time they are also simple and monotonous in appearance as compared with corresponding natural reefs, thereby being unable to substantially attract visiting divers seeking recreation.

US-7,513,711 discloses an artificial reef according to the preamble of claim 1.

Given the well documented lack of artificial reefs that satisfy modern recreational diving requirements, it is an object of the present invention to overcome the drawbacks and deficiencies of the prior art with the proposal of the construction of a new type of artificial reef for recreational diving that fully retains or excels the functionality of natural reefs through providing an enhanced availability and heterogeneity of microhabitats and refuges for benthic and benthopelagic marine organisms whilst simulating the form and aesthetics of natural reefs.

It is a further object of the invention to provide a technical process for the production of such artificial reefs having a form and aesthetics similar to that of natural reefs and a structure that allows their handy launching and mounting onto the seabed.

A further object of the invention is the creation of artificial underwater ecotourism attractions or underwater parks or artificial oases for recreational diving, wherein a predetermined plurality of artificial reefs of the invention is employed, such artificial reefs specifying one or more diving trails starting at predetermined diving starting points and terminating at predetermined diving termination points wherein emergence of the visiting divers takes place.

An object of the invention also is the equipping of the aforementioned artificial oases for recreational diving, in order to provide a secure operation thereof, with floating means on the sea surface adapted to provide anchorage of the vessels used to carry visiting divers at the starting point of diving trails within the abovementioned artificial oases and to pick them up at the point of termination thereof and with special surface buoys adapted to provide a visible marking of the outer borders of the oases and prevent the entering of vessels within the protected interior areas of the oases thereby averting accidents.

A further object of the invention in relation to the aforementioned artificial oases for recreational diving is the employment of artificial reefs of a smaller size acting as milestones of the diving trail, such milestones being deemed particularly necessary in underwater oases wherein the clusters of artificial reefs installed onto the seabed are significantly distant and they can not be distinguished clearly in conditions of limited transparency of the water.

It is thus an object of the invention through the proposal of artificial reefs and the layout of underwater artificial oases for recreational diving to provide on the one hand a substitute or to avert at some extent the modern trend of establishing diving parks in remote, environmentally sensitive and extensive areas of the seabed that present a high ecological value and aesthetics whilst raising major environmental management issues for the conservation and protection thereof, and on the other hand to render, through the application of this technology, the installation of such underwater artificial oases for recreational diving near major urban and tourist centers within relatively small-scale protected areas of the seabed and mainly onto a sedimentary substrate (sand, muddy sand, etc.) that in itself does not present any particular ecological, fishing or archaeological interest.

### SUMMARY OF THE INVENTION

Each artificial reef unit of the invention is made of concrete and exhibits the general form of an upright elongate monolith characterized by an extensive structural complexity. This artificial monolith provides extensive vertically or almost vertically delimited surfaces at the exterior thereof comprising a plurality of irregular corrugations in the form of successive recesses and overhangs that emulates the micro-texture of underwater rocks and provides a suitable substrate for the settlement on their surface of benthic plant and animal organisms. Irregularly sized blind holes of varying diameter and varying depth are created at selected locations of the exterior surface of the reefs. In parallel, inwardly oriented through or blind crevices of varying sizes and thickness are being formed that perpendicularly, obliquely or transversely pass through large portions of the main structure of the reefs. Special wider chambers that communicate with the external environment through those through or blind crevices are being constructed in the interior of the reefs. All these configurations in the exterior and the interior of the reefs provide microhabitats and refuges to a wide range of benthic and benthopelagic fish as well as to various invertebrate benthic species, such as by way of example cephalopods and decapods crustaceans. These organisms live permanently or find a long term or temporary shelter within the individual structures of the reef, which they choose depending on their size.

Each artificial reef of the invention consists of a compact base plate of reinforced concrete and a superstructure wherein are created the aforementioned exterior and interior configurations of microhabitats and refuges for a number of benthic and benthopelagic fish, as well as of a variety of invertebrate species. The base of the reef comprises at least one through hole, preferably vertically oriented at the center thereof, a foundation beam or tube being adapted to pass through this hole and a pair of through holes extending from one point on the circumference of the base to a directly opposing point, preferably symmetrically on either side of the central vertically oriented hole, ropes or straps being adapted to pass through these holes to suspend the reef during launching thereof onto the seabed.

The stability of the artificial reefs onto the substrate of eventual installation thereof is in the first instance being achieved with the displacement of the center of gravity thereof towards the base of the artificial reef, such displacement being materialized in the first place with the construction of the base with a slab of reinforced concrete and of the superstructure preferably with a special concrete comprising inert lightweight materials. The latter is being sprayed in one or more successive stages to cover a structural frame composed of a complex of stems extending along a trunk implanted into the base, said complex of stems being covered with a plurality of plastic grid items in a predetermined manner in correspondence with a prior elaborated design. The sequential covering of the structural frame of the superstructure with concrete ultimately results in the configuration of the walls of microhabitats and refuges of the artificial reef, which due to their multiplex structure and the numerous empty spaces formed in between those walls in the form of holes, crevices, chambers, etc. render the superstructure with a comparatively lower specific weight as compared to that of the base.

### BRIEF DESCRIPTION OF THE DRAWINGS

The invention will be best understood by those skilled in the art by reference to the accompanying drawings which present illustrative preferred embodiments thereof.

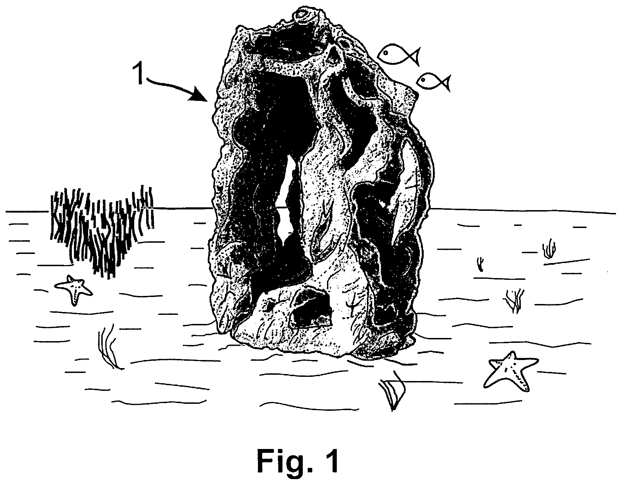

Fig. 1 shows a diagrammatic view of an artificial reef for recreational diving mounted onto the seabed.
Fig. 2 shows a general perspective vertical view (a) and side view (b) of an artificial reef unit provided with a vertically oriented foundation hole in the base thereof and a pair of through holes for ropes or straps being adapted to pass through these holes to suspend the reef during launching thereof onto the seabed.
Fig. 3 shows an exemplary view illustrating the structural complexity of an artificial reef unit of the invention.
Figs. 4a-4c show the sequential stages in accordance with a preferred method of construction of the superstructure of an artificial reef for recreational diving of the invention wherein a special scaffold is being employed for the suspension of the plastic grid items used in the construction of the superstructure of the unit.
Fig. 5 is a vertically oriented sectional view of an artificial reef unit for recreational diving presenting the foundation thereof with a pair of foundation beams onto the seabed.
Fig. 6 is an illustrative example of a composite artificial reef comprising two vertically oriented artificial monoliths with a horizontally oriented artificial boulder on top thereof.
Fig. 7 shows an illustrative arrangement of a variety of artificial reefs for recreational diving within a protected site for recreational diving (oasis).

### DETAILED DESCRIPTION OF PREFERRED EMBODIMENTS

The invention will be hereinafter described by reference to the illustrative embodiments presented in the accompanying drawings. It should be noted that these embodiments are provided for illustrative purposes only to serve in adequately disclosing the invention and do not limit the scope of protection thereof.

An artificial reef 1 for recreational diving of the invention comprises a base 2 constructed with a slab of reinforced concrete and a vertically extending superstructure 3 having the general configuration of an upright elongate monolith of high structural complexity, such superstructure 3 being constructed with concrete, preferably with a special concrete comprising inert lightweight materials that is being sprayed in one or more successive stages to cover a structural frame composed of a trunk 31 implanted into the base, a cluster of stems 32 and plastic grid items 12 suspended onto the complex of stems 32. The structural frame of the superstructure 3 has a predetermined structure of the aforementioned cluster of stems 32 suitable for implementing a predetermined plan of suspension of the plastic grid items 12 thereupon, so that, following the aforementioned ejection of concrete, a predetermined wall configuration of the superstructure 3 is being created, such walls providing a desired, predetermined arrangement of microhabitats and refuges of the artificial reef. It is herein noted that due to the multiplex structure and the numerous empty spaces formed in between these walls in the form of holes, crevices, chambers, etc. the superstructure 3 is rendered with a comparatively lower specific weight as compared to that of the base.

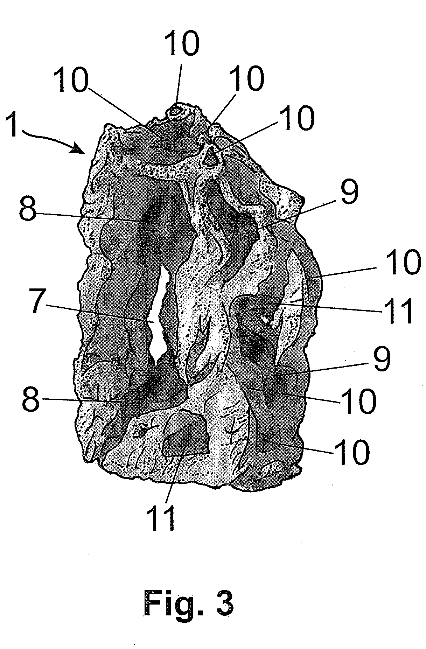

The embodiment of the artificial reef unit of the invention illustratively shown in Fig. 3 comprises through holes 7 leading to chambers 8 inside the reef, blind crevices 9 and external orifices of smaller or larger dimensions that define smaller cavities 10 and larger main cavities 11 respectively.

The various lines of production of artificial reefs for recreational diving produce artificial reef units characterized by generally identical dimensions and shape with an identical structural complexity for each preselected design pattern in the exterior and interior thereof. By way of example, the artificial reef units of each production line follow an identical configuration and manufacturing standard in relation to the overall number, type, shape and location of the individual interior or exterior morphological structures, e.g. of the smaller and larger exterior apertures or cavities 10 and 11 or of the through holes 7 or blind crevices 9 or of the interior open chambers 8, etc. The design of the varying lines of production of artificial reef units and the final selection of the structural characteristics of each series exclusively depends on the number and size of benthic and benthopelagic target organisms that could potentially choose to settle, either permanently or temporarily within the reefs of the invention. By way of example the provision of a certain number of major exterior holes forming cavities 10, 11 can provide the habitat for particularly targeted fish species of the family of Serranidae (e.g. groupers) and the corresponding construction of through holes 7 or of blind crevices 9 with or without configurations of interior chambers 8 is a preferred refuge of various species of the family of Sparidae (e.g. White seabream, Common two-banded seabream, etc.).

In areas of the seabed where there prevail profoundly intense hydrodynamic phenomena, additional measures are adopted for maintaining each reef unit fixedly mounted in the original location of installation thereof. In this respect one or more slots are provided in the form of cylindrical or alternatively shaped holes extending vertically upwardly into a portion or the entire superstructure of the reef perpendicularly oriented to the base. These holes are provided with a specially tapered opening, illustratively in the form of a truncated cone, in the lower part thereof allowing, during the launching of the artificial reef onto the seabed, a handy introduction therein of appropriately sized and shaped foundation tubes or beams fixedly mounted vertically within the seabed. The number of the aforementioned holes and of the corresponding foundation tubes or beams to be employed depends on the intensity of hydrodynamic phenomena, the overall height and the vertically oriented surface area of each reef unit exposed to the sea bottom currents. Similar methods of implantation of foundation pipes within sedimentary bottoms are known e.g. as disclosed by Dounas in EP0897034.

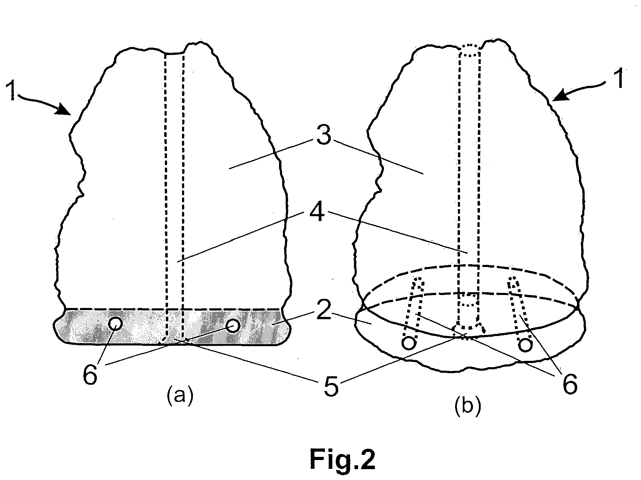

As illustrated in Fig. 2, the base 2 of the reef comprises a through hole 4 that is perpendicularly oriented with respect to the base 2 and extends vertically upwardly along a portion or the entire height of the superstructure 3, such through hole 4 being adapted to be used in the foundation of the artificial reef onto the seabed. The foundation is implemented by the introduction of a rigid foundation beam or tube into the through hole 4 and thereafter with fixedly mounting the same perpendicularly into the substrate of the seabed. According to a second preferred embodiment of the invention the bottom end of the hole 4 at the bottom of the base 2 is tapered and takes the form of a truncated cone with a broadened opening 5 adapted to facilitate the entry of the foundation tube or beam that has previously been fixedly mounted onto the surface of the seabed and extends perpendicularly oriented therefrom.

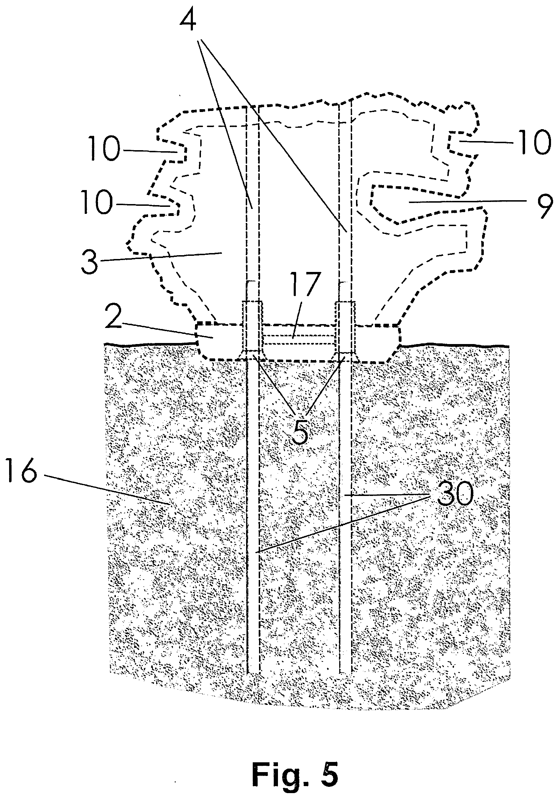

As shown in Fig. 5, the foundation might be implemented with a pair of foundation beams or tubes 30 extending vertically upwardly, throughout the superstructure 3, whilst being fixedly mounted into the seabed 16 in the location of installation of the artificial reef unit. According to this embodiment of the invention, the foundation tubes 30 perpendicularly oriented onto the base 2 are rigidly connected therein by means of a horizontally extending bar 17.

With a scope of handily launching the reef onto the seabed, in accordance with a preferred embodiment of the invention, the base 2 is provided with a pair of through holes 6, which extend from a point on the circumference of the base to the directly opposite point thereof, said holes 6 being oriented in parallel directions, preferably symmetrically on either side of the central vertically oriented hole 4, wherein these holes 6 are adapted to receive ropes or straps employed to fasten the artificial reef unit and enable movement and final settlement thereof onto the seabed.

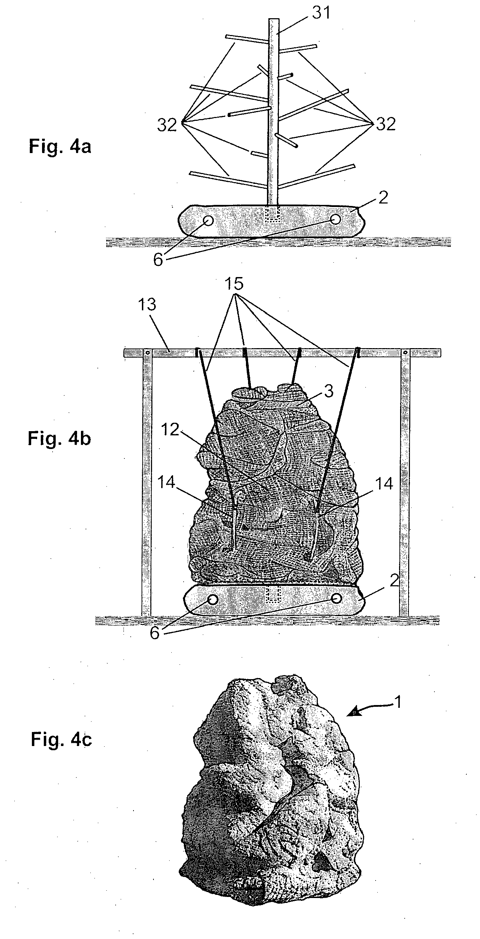

Figs. 4a-4c present successive stages in the manufacturing process of the superstructure 3 of the reef, wherein a trunk 31 is being implanted into the base 2 and a plurality of stems 32 originating from and around the trunk 31 is provided, such stems 32 thereby forming a predetermined design pattern whereupon a plurality of plastic grid items 12 will be suspended to form the structural frame of the superstructure 3. As shown in Fig. 4b, the abovementioned assembly of the base 2 and of the structural frame of the superstructure 3 is surrounded by a scaffold 13 that is employed in performing the gradual assembly and secure mounting of the plastic grid items 12 onto the stems 32 with a scope of appropriately implementing the predetermined design pattern prior and during the ejection of concrete in the process of forming the superstructure 3.

In order to securely fix the plastic grid items 12 at the predetermined positions that would render, following concrete ejection, the formation of appropriately configured walls of the artificial reef which would provide the microhabitats and refuges of targeted benthic and benthopelagic species, ropes 14 are provided, these ropes 14 being fixedly mounted onto the base 2 and appropriately suspended along the scaffold 13 by means of ropes 15 for securely supporting the superstructure 3 during the various phases of setting the plastic grid items 12 in position and of subsequently covering the same with concrete being ejected thereupon.

Whilst Fig. 4a shows the naked incomplete structural frame of the superstructure 3 with the complex of stem members 32 around the trunk 31, Fig. 4b shows an intermediate stage in the process of construction of the structural frame wherein the structural frame is being completed with a plurality of plastic grid items 12 suspended thereupon and in Fig. 4c one distinguishes a layer of concrete that has been ejected onto the structural frame of the superstructure 3 by means of a concrete ejecting machine to generate the desired microhabitats of the artificial reef 1 proposed in the present invention.

The stability of the artificial reefs in the locus of final installation thereof is ensured in the first instance with the displacement of their center of gravity towards the area of their mounting onto the seabed, such displacement being achieved with the employment of a slab of reinforced concrete in the construction of the base 2 on the one hand and of a special concrete comprising inert lightweight materials in the construction of the superstructure 3 on the other hand, whereby the multiplex structure and the numerous empty spaces formed in between the walls of the superstructure in the form of cavities 10, 11, holes 7, crevices 9, chambers 8, etc. render the superstructure with a comparatively lower specific weight as compared to that of the base. This differential in the specific weight of the base 2 and the superstructure 3 in each artificial reef unit 1 increases its stability in conditions of prevalence of weak or even moderate hydrodynamic phenomena (waves, bottom currents) through increasing their resistance (drag force) to prevailing currents and allows safe maintenance of their original upright mounting position onto the seabed.

The artificial reef 1 of the invention may be used as a singular item founded onto predetermined locations of the seabed. According to a preferred embodiment of the invention a plurality of groups comprising a plurality of artificial reef units 1 that have been constructed in accordance with a single design pattern or preferably in accordance with a variety of design patterns, the latter attracting a yet greater interest of divers, are installed onto the seabed at predetermined short distances from each other, thereby creating an underwater artificial oasis for recreational diving. The artificial reef units making up each group may be specialized in terms of the structural complexity thereof and in this respect they may be characterized by a specific number, type and dimensions of their exterior and interior structural features, e.g. holes 7, cavities 10, 11, crevices 9, chambers 8, etc., thereby enabling habitation of specifically targeted species of benthic and benthopelagic organisms in each particular group of artificial reefs. The hereinabove discrete groups of reefs provide a desired diversification of the distribution of marine biodiversity along the diving trails, thereby correspondingly increasing their attractiveness for visiting divers.

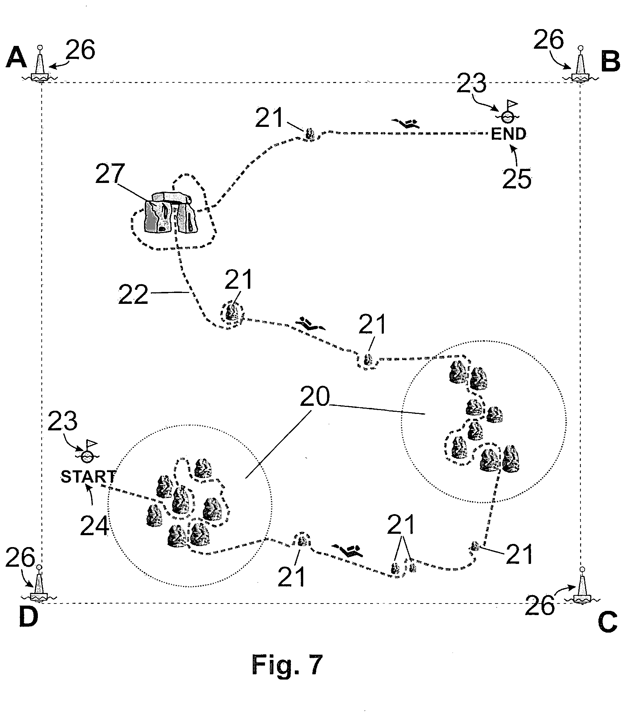

Fig. 7 displays an illustrative arrangement for an underwater artificial oasis for recreational diving, such arrangement comprising a plurality of artificial reef units 1 organized in groups 20 bounded within an appropriately planned section (ABCD) of the seabed that defines the limits of the protected area assigned for this artificial underwater oasis for recreational diving. According to a preferred embodiment of the invention, an appropriate plurality of elementary artificial reefs 21 is being arranged along the diving trail 22 to lead the way from one group of artificial reefs 20 to the next, such elementary artificial reefs 21 thereby identifying the course along a diving trail within the planned section (ABCD) of the seabed.

In order to ensure safe touring within the oasis for recreational diving, it is deemed appropriate to provide surface floaters 23 for the anchorage of vessels carrying visiting divers at the starting point 24 and picking them up at the end 25 of each diving trail 22 as it is specified by the dotted line connecting the starting point 24 and the point of termination 25. Appropriate surface buoys 26 are provided at the corners of the contour of the planned section (ABCD), such buoys 26 marking the outer limits of the oases thereby preventing the entrance of vessels within the protected interior areas of the oases and averting potential accidents.

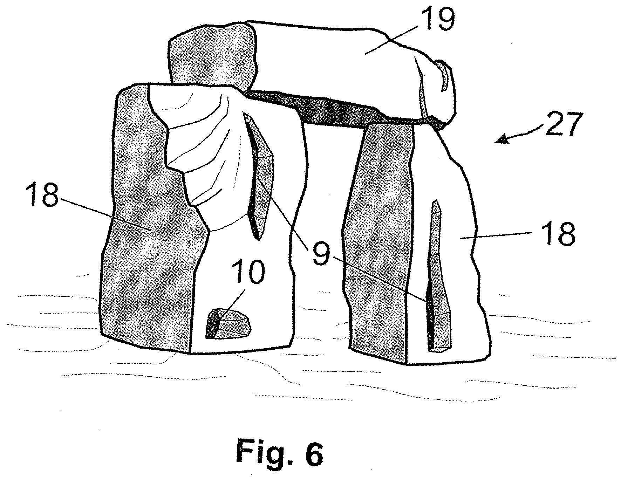

Other selected simulations of natural or man-made sculptures might be located along the diving trails. By way of example, the artificial reef composition 27 is employed as illustrated in Fig. 6, wherein this reef composition 27 simulates a natural sculpture composed of two vertically oriented boulders 18 and a third horizontally oriented portion 19 on top thereof. The abovementioned artistic compositions 27 may be structurally similar to the artificial reef 1 of the invention and they may be provided with similar configurations on their exterior, e.g. crevices 9 and cavities 10.

## Claims

1. Artificial reef for recreational diving (1) comprising a base (2) and a substantially vertically extending superstructure (3) having the general form of an upstanding elongate monolith seated thereupon, wherein the superstructure (3) is made with a structural frame having an exterior and an interior structural complexity predetermined in accordance with a preselected design pattern, said structural frame comprising a plurality of stem members (32) of predetermined structure extending all around a trunk member (31) **characterized in that** the base (2) is made of a slab of reinforced concrete, said structural frame being implanted into the base (2) and a plurality of plastic grid items (12) suspended onto said stem members (32) all around said trunk member (31) in a predetermined manner that corresponds to said preselected design pattern, said structural frame of the superstructure (3) being thereafter coated with concrete ejected thereupon in one or more successive stages, whereby a plurality of blind crevices (9), through holes (7) leading to chambers (8) inside the reef and exterior holes of smaller or larger dimensions that define small cavities (10) and larger cavities (11) respectively are being formed functionally dependent on the predetermined design pattern of said structural frame of stem members (32) around said trunk (31) and of said plastic grid items (12) mounted thereupon, wherein said blind crevices (9), through holes (7) leading to chambers (8) and small and large cavities (10, 11) constitute microhabitats and refuges for targeted benthic and benthopelagic species, which live permanently or find a long term or temporary shelter within said microhabitats selecting them according to their size.

2. Artificial reef for recreational diving (1) according to claim 1, **characterized in that** the superstructure (3) is made of concrete comprising inert lightweight materials and in combination with its multiplex structure with numerous voids formed therein in the form of holes leading to small cavities (10) and large cavities (11), through holes (7) and blind crevices (9), chambers (8), etc., said superstructure (3) acquires a comparatively lower specific weight with respect to the base (2) thereby effecting a downward displacement of the center of gravity of the artificial reef (1) towards said base (2) and providing stability at the location of installation thereof onto the seabed.

3. Artificial reef for recreational diving (1) according to claim 1, **characterized in that** the base (2) comprises at least one through hole (4) that passes perpendicularly through the base (2) and extends vertically along a part or the entire height of the superstructure (3), said hole (4) being adapted to receive a beam or tube (30) previously mounted into the seabed (16) for effecting foundation of the artificial reef.

4. Artificial reef for recreational diving (1) according to claim 3, **characterized in that** said at least one through hole (4) terminates with an enlarged end at the bottom of the base (2), said enlarged end being configured in the shape of an open ended truncated cone (5) that facilitates insertion therein of said previously mounted foundation beam or tube (30).

5. Artificial reef for recreational diving (1) according to claim 3 or 4, **characterized in that** it comprises two or more through holes (4) adapted to receive two or more foundation beams or tubes (30), said through holes (4) passing perpendicularly through the base (2) and extending vertically along a part or the entire height of the superstructure (3) being transversally interconnected with a horizontally extending bar (17) within the base (2).

6. Artificial reef for recreational diving (1) according to claim 1, **characterized in that** a fastening device of the artificial reef (1) is employed in providing a handy launching of the artificial reef (1) onto the seabed (16), said base (2) being provided with a pair of through parallel holes (6) extending from one point on the circumference of the base (2) to a directly opposing point, symmetrically on either side of the center of the base (2), said fastening device comprising ropes or straps being adapted to pass through said through parallel holes (6) to suspend the reef during movement and launching thereof onto the seabed (16).

7. Artificial reef for recreational diving (1) according to claim 1, **characterized in that** the exterior and interior structural complexity of the structural frame pertaining to each preselected design pattern of the superstructure (3) that forms the basis for organizing distinct production lines of artificial reef units (1), each production line featuring identically configured and identically located through holes (7), blind crevices (9), open interior chambers (8), exterior holes leading to smaller and larger cavities (10) and (11), etc., is predetermined according to the number and the size of benthic and benthopelagic targeted organisms that could potentially choose the artificial reef (1) for their permanent or temporary settlement.

8. An underwater artificial oasis for recreational diving comprising a plurality of the artificial reefs for recreational diving (1) of claims 1-7, said artificial reefs (1) organized in groups (20) bounded in close proximity within a planned section (ABCD) of the seabed that defines the limits of a protected area, a plurality of elementary artificial reefs (21) being arranged along a diving trail (22) within the artificial oasis to lead the way from one group of artificial reefs (20) to the next, said elementary artificial reefs (21) being employed in identifying the course along diving trails (22), surface floaters (23) being provided for the anchorage of vessels carrying visiting divers at the starting point (24) and picking them up at the point of termination (25) of the diving trails (22) and surface buoys (26) being provided at the corners of the contour of the planned section (ABCD).

9. An underwater artificial oasis for recreational diving according to claim 8, **characterized in that** the artificial reef units (1) making up each particular group of artificial reefs (20) have a distinct identical structural complexity with a specific number of artificial reef units (1) in said particular group and a specific type and dimensions of the exterior and interior structural features of each artificial reef unit including the exterior holes leading to smaller and larger cavities (10) and (11), the through holes (7), the blind crevices (9), the open interior chambers (8), etc., said structural features defining attractiveness of said artificial reef units (1) of said particular group of artificial reefs (20) for settlement of specifically targeted benthic and benthopelagic organisms, compatible with said exterior and interior structural features of said artificial reef units (1) in the particular group (20), whereby successive installation of groups of artificial reefs (20) with artificial reef units (1) having varying distinct structural complexity along the diving trail (22) of the artificial oasis ensures diversification of the distribution of marine biodiversity.

10. An underwater artificial oasis for recreational diving according to claim 8 or 9, **characterized in that** it comprises elements simulating natural or man-made sculptures (27) along the diving trails (22) being provided within the planned section (ABCD).

## Patentansprüche

1. Künstliches Riff zum Freizeittauchen (1) bestehend aus einer Basis (2) und auf die, der wesentlich vertikal erstreckende Überbau (3) sitzt, der eine allgemeine Form eines aufrechten länglichen Monolithen hat, wobei der Überbau (3) aus einem strukturellen Gerüst gebaut ist, welches eine äußere und eine innere strukturelle Komplexität hat, die nach einem vorgewählten Konzept vorbestimmt ist, das besagte strukturelle Gerüst aus eine Vielzahl von Stammstielen (32) vorbestimmter Struktur eingerichtet ist, die alle Stammstielen rund um ein Stammmitglied (31) sich erstrecken, **dadurch gekennzeichnet, daß** die Basis (2) aus einer Stahlbetonplatte gebaut ist, wobei das besagte strukturelle Gerüst in die Basis (2) implantiert wird und eine Vielzahl von Kunststoffnetzelementen (12) an den besagten Stammstielen (32) rund um das besagte Stammmitglied (31) auf eine vorbestimmte Weise, die dem besagten vorgewählten Konzept entspricht, aufgehängt werden, welches strukturelles Gerüst des Überbaues (3) danach mit Beton, der in einer oder mehreren aufeinanderfolgenden Phasen gesprüht wird, beschichtet wird, und auf diese Weise ein in Zusammenhang abhängiges von dem vorgewählten Konzept des besagten strukturellen Gerüstes der Stammstielen (32) rund um das besagte Stammmitglied (31) und von den besagten Kunststoffnetzelementen (12), die auf denen aufgehängt werden, eine Vielzahl von blinden Spalten (9), durchgehende Öffnungen (7), die zu Kammern (8) innerhalb des Riffs führen und Außenöffnungen von kleineren oder größeren Dimensionen, die entsprechend kleine Hohlräume (10) und größere Hohlräume (11) definieren, gebildet werden, wobei die besagten blinden Spalten (9), durchgehende Öffnungen (7), die zu Kammern (8) führen, und kleine und große Hohlräume (10, 11) Mikro-Habitate und benthopelagische Zufluchtsorte und benthische Organismen-Zielen sind, welche dauernd leben oder einen langfristigen oder vorübergehenden Zufluchtsort in den besagten Mikro-Habitaten finden, indem sie entsprechend ihrer Größe ausgewählt werden.

2. Künstliches Riff zum Freizeittauchen (1) nach Anspruch 1, **dadurch gekennzeichnet, daß** der Überbau (3) aus Beton mit besonderen inerten Leichtbaustoffen und in Kombination mit seiner Multiplexstruktur mit zahlreichen darin gebildeten leeren Räumen in Form von Öffnungen, die zu kleinen Hohlräumen (10) und große Hohlräume (11) führen, , durchgehende Öffnungen (7) und blinde Spalten (9), Kammern (8) usw. gebaut wird, wobei der Überbau (3) sich ein vergleichsweises geringeres besonderes Gewicht in Bezug mit der Basis (2) verschafft, so daß eine nach unten Verschiebung des Schwerpunkts des künstlichen Riffs (1) zu der Basis (2) verursacht wird und Stabilität an der Installation-Stelle auf dem Meeresboden gewähren.

3. Künstliches Riff zum Freizeittauchen (1) nach Anspruch 1, **dadurch gekennzeichnet, dass** die Basis (2) mindestens eine durchgehende Öffnung (4) enthält, die senkrecht durch die Basis (2) läuft und sich vertikal entlang eines Teils oder des Ganzen der Höhe des Überbaues (3) erstreckt, wobei die Öffnung (4) so angeordnet ist, damit sie zuvor in dem Meeresboden (16) den hineinsteckenden Balken oder Rohr (30) für die Gründung des künstlichen Riffs, aufnehmen kann.

4. Künstliches Riff für das Freizeittauchen (1) nach Anspruch 3, **dadurch gekennzeichnet, dass** das mindestens eine durchgehende Öffnung (4) mit einer verbreiternden Endung am Boden der Basis (2) endet, wobei die verbreiternde Endung in der Form eines Kegelstumpfs (5) mit offenen Endungen, für die Erleichterung des Eindringens innerhalb dessen der besagten zuvor hineinsteckenden Balkens oder des fundamentierten Rohrs (30), gestaltet wird.

5. Künstliches Riff zum Freizeittauchen (1) nach Anspruch 3 oder 4, **dadurch gekennzeichnet, dass** es zwei oder mehr durchgehende Öffnungen (4) enthält, die so angeordnet sind, damit sie zwei oder mehrere Balken oder fundamentierten Rohre (30) aufnehmen können, wobei die besagten durchgehende Öffnungen (4) sich senkrecht durch die Basis (2) laufen und sich vertikal entlang eines Teils oder des Ganzen der Höhe des Überbaues (3) erstrecken, die quer mit einer horizontal erstreckenden Bar (7) innerhalb der Basis (2) verbunden sind.

6. Künstliches Riff für das Freizeittauchen (1) nach Anspruch 1, **dadurch gekennzeichnet, dass** eine Befestigungsvorrichtung für den mühelosen Stapellauf des Riffs (1) im Meeresboden (16) verwendet wird, wobei die besagte Basis (2) mit einem Paar von parallelen durchgehenden Öffnungen (6) versehen ist, die sich von einem Punkt am Umfang der Basis (2) bis zu einem direkt gegenüberliegenden Punkt erstrecken, symmetrisch beiderseits in der Mitte der Basis (2), wobei die Befestigungsvorrichtung Seilen oder Bändern enthält, die so angeordnet werden, um durch den besagten parallelen durchgehenden Öffnungen (6) durchlaufen zu können, damit das Riff während seiner Umstellung und Versenkung am Meeresboden (16) aufhängen werden kann.

7. Künstliches Riff für das Freizeittauchen (1) nach Anspruch 1, **dadurch gekennzeichnet, dass** die äußere und innere strukturelle Komplexität des strukturellen Gerüsts von jedem vorgewählten Konzept des Überbaues (3), dass die Grundlage für die Organisation unterschiedlicher Produktionslinien von Einheiten des künstlichen Riffs (1) ist, wo jede Produktionslinie wird identisch gestaltete und identisch angeordnete durchgehende Öffnungen (7), blinde Spalten (9), offene Innenkammern (8), Außenöffnungen, die zu kleineren und größeren Hohlräumen (10) und (11) führen usw. festgelegt und wird entsprechend der Anzahl und der Größe der benthischen und benthopelagischen Organismen-Zielen, die das künstliche Riff (1) möglicherweise für ihre dauernde oder vorübergehende Besiedlung auswählen könnten, vorbestimmt.

8. Künstliche Unterwasseroase für das Freizeittauchen, die eine Vielzahl von Einheiten der künstlichen Riffen zum Freizeittauchen (1) nach den Ansprüchen 1 bis 7 enthält, wobei die besagten künstlichen Riffe (1), die in Gruppen (20) organisiert sind, und innerhalb einer geplanten Sektion (ABCD) des Meeresbodens, die einen bestimmten Schutzgebiet in kleinem Abstand zwischen denen definiert, orientiert werden, wobei eine Vielzahl von elementarischen künstlichen Grundriffen (21) entlang eines Tauchpfades (22) innerhalb der künstlichen Oase angeordnet ist, damit der Weg von einer Gruppe der künstlichen Riffen (20) zu dem nächsten definiert werden kann, wobei die besagten elementarische künstliche Riffe (21) als Grenzzeichen für das Linieren von den Tauchpfaden (22) verwendet werden, wobei die Oberflächenschwimmer (23) zum verankern der Schiffen, die besuchende Taucher am Startpunkt (24) transportieren und sie am Endpunkt (25) der Tauchpfade (22) übernehmen, verwendet werden und die Oberflächenbojen (26) an den Spitzen der geplanten Sektion (ABCD) vorgesehen werden.

9. Künstliche Unterwasseroase für das Freizeittauchen nach Anspruch 8, **dadurch gekennzeichnet, dass** die künstlichen Riffeinheiten (1), aus die jede bestimmte Gruppe von künstlichen Riffen (20) besteht, haben eine erkennbar identisch strukturelle Komplexität mit einer bestimmten Anzahl von künstlichen Riffeinheiten (1) in der besagten bestimmten Gruppe mit einer bestimmten Formel und Dimensionen der äußeren und inneren strukturellen Merkmale jeder künstlichen Riffeinheit , die aus äußeren Öffnungen, die zu kleineren und größeren Hohlräumen (10) und (11) führen, die durchgehende Öffnungen (7), die blinde Spalten (9), die offenen inneren Kammern (8) usw. bestehen, wobei die besagten strukturellen Merkmale die Attraktivität der besagten künstlichen Riffeinheiten (1) der besagten bestimmten Gruppe von künstlichen Riffen (20) für die Istallation von spezifisch gezielten benthischen und benthopelagischen Organismen definieren, die kompatibel mit den besagten äußeren und inneren strukturellen Merkmalen der besagten künstlichen Riffeinheiten (1) in der bestimmten Gruppe (20) sind, wo die aufeinanderfolgende Installation von Gruppen der künstlichen Riffen (20) mit künstlichen Riffeinheiten (1), die unterschiedliche erkennbare strukturelle Komplexität entlang des Tauchpfades (22) der künstlichen Oase haben, wird eine Differenzierung der Verteilung der marinen Artenvielfalt sichergestellt.

10. Künstliche Unterwasseroase für das Freizeittauchen nach Anspruch 8 oder 9, **dadurch gekennzeichnet, dass** sie Simulations-Elemente von natürlichen oder künstlichen Skulpturen (27) entlang der in der geplanten Sektion (ABCD) der Tauchpfaden (22) umfasst.

## Revendications

1. Récif artificiel pour plongée récréative (1) constitué d'une base (2) et d'une superstructure généralement verticalement étendue (3) montée dessus, ayant la forme générale d'un monolithe allongé tenant debout, où la superstructure (3) est réalisée avec une ossature structurelle, laquelle a une complexité structurelle externe et interne prédéterminée selon un modèle de conception présélectionnée, ladite ossature structurelle comprenant une multitude de tiges (32) de structure prédéterminée, avec toutes les tiges étendues tout autour d'un tronc (31), **caractérisé en ce que** la base (2) est constituée d'une dalle en béton armé, où ladite ossature structurelle est implantée dans la base (2) et une multitude de grillages en plastique (12) suspendus auxdites tiges (32) tout autour dudit tronc (31) de manière prédéterminée qui correspond audit modèle de conception présélectionnée, laquelle ossature structurelle de la superstructure (3) est ensuite recouverte de béton, saillante sur une ou plusieurs phases successives, formant, de manière fonctionnelle dépendant de la conception prédéterminée de ladite ossature structurelle des tiges (32) autour dudit tronc (31) et desdits grillages en plastique (12) qui sont suspendus sur celles-ci, une multitude de fentes borgnes (9), d'orifices traversants (7) conduisant aux compartiments (8) à l'intérieur du récif et d'orifices externes de dimensions plus petites ou plus grandes, lesquels définissent respectivement des petites et grandes cavités (10, 11), constituent des micro-habitats et des refuges pour des organismes-cibles benthiques et bentho-pélagiques, qui vivent en permanence ou trouvent un refuge temporaire ou de longue durée au sein desdits micro-habitats en les sélectionnant en fonction de leur taille.

2. Récif artificiel pour plongée récréative (1) selon la revendication 1, **caractérisé en ce que** la superstructure (3) est réalisée en béton comprenant des matériaux légers inertes et en combinaison avec sa structure multifonctionnelle avec de nombreux espaces vides configurés sous la forme de petites cavités (10) et grandes cavités (11), d'orifices traversants (7) et de fentes borgnes (9), de compartiments (8), etc.. La superstructure (3) acquiert comparativement un poids spécifique inférieur par rapport à la base (2), effectuant ainsi un déplacement vers le bas du centre de gravité du récif artificiel (1) vers ladite base (2) et apportant une stabilité à l'emplacement d'installation de celui-ci sur le fond marin.

3. Récif artificiel pour plongée récréative (1) selon la revendication 1, **caractérisé en ce que** la base (2) comprend au moins un orifice traversant (4) qui passe perpendiculairement à travers la base (2) et s'étend verticalement le long d'une partie ou de la totalité de la hauteur de la superstructure (3), où ledit orifice (4) est aménagé afin de recevoir une poutre ou un tube (30) préalablement monté dans le fond marin (16) pour effectuer la fondation du récif artificiel.

4. Récif artificiel pour plongée récréative (1) selon la revendication 3, **caractérisé en ce que** ledit au moins un orifice traversant (4) se termine par une extrémité élargie au fond de la base (2), où ladite extrémité élargie est configurée en forme de cône tronqué avec des extrémités ouvertes (5) afin de faciliter l'insertion, à l'intérieur de celui-ci, de ladite poutre ou ledit tube de fondation (30) préalablement montée.

5. Récif artificiel pour plongée récréative (1) selon la revendication 3 ou 4, **caractérisé en ce qu'**il comprend deux ou plusieurs orifices traversants (4), aménagés pour la réception de deux ou plusieurs poutres ou tubes de fondation (30), où lesdits orifices traversants (4) passent perpendiculairement à travers la base (2) et s'étendent verticalement le long d'une partie ou de la totalité de la hauteur de la superstructure (3), interconnectés transversalement avec une barre étendue horizontalement (17) à l'intérieur de la base (2).

6. Récif artificiel pour plongée récréative (1) selon la revendication 1, **caractérisé en ce qu'**un dispositif de fixation du récif artificiel (1) est utilisé pour l'aménagement facile du récif artificiel (1) sur le fond marin (16), où ladite base (2) est munie d'une paire d'orifices parallèles traversants (6), lesquels s'étendent d'un point situé sur la circonférence de la base (2) jusqu'à un point directement opposé, symétriquement de part et d'autre du centre de la base (2), où le dispositif de fixation comprend des cordes ou des sangles agencées, passant à travers lesdits orifices parallèles traversants (6), pour la suspension du récif durant son déplacement et son aménagement sur le fond marin (16).

7. Récif artificiel pour plongée récréative (1) selon la revendication 1, **caractérisé en ce que** la complexité structurelle externe et interne de l'ossature structurelle se rapportant à chaque modèle de conception présélectionnée de la superstructure (3) qui constitue la base d'organisation de lignes de production distinctes d'unités de récifs artificiels (1), où chaque ligne de production définit une configuration identique et un emplacement similaire d'orifices traversants (7), de fentes borgnes (9), de compartiments internes ouverts (8), d'orifices externes qui conduisent à des cavités plus petites et plus grandes (10) et (11), etc., est prédéterminée en fonction de la population et de la taille des organismes-cibles benthiques et bentho-pélagiques qui pourraient potentiellement choisir le récif artificiel (1) pour leur installation permanente ou temporaire.

8. Oasis artificielle sous-marine pour plongée récréative constituée d'une multitude d'unités de récifs artificiels pour plongée récréative (1) des revendications 1-7, où lesdits récifs artificiels (1) sont organisés en groupes (20), délimités à l'intérieur d'une section espacée (ABCD) du fond marin qui définissent les limites d'une zone protégée spécifique, à une petite distance les unes des autres, où une multitude de récifs artificiels élémentaires (21) sont disposés le long d'un itinéraire de plongée (22) à l'intérieur de l'oasis artificiel afin de montrer le chemin à partir d'un groupe de récifs artificiels (20) vers un autre, où lesdits récifs artificiels élémentaires (21) sont utilisés comme point de repère pour l'élaboration des itinéraires de plongée (22), où des flotteurs de surface (23) sont fournis pour l'ancrage des bateaux de transport des plongeurs-visiteurs au point de départ (24) et de leur récupération au point d'arrêt (25) des itinéraires de plongée (22) et des bouées de surface (26) sont placées aux sommets de la section espacée (ABCD).

9. Oasis artificielle sous-marine pour plongée récréative selon la revendication 8, **caractérisée en ce que** les unités de récifs artificiels (1) qui constituent chaque groupe particulier de récifs artificiels (20) ont une complexité structurelle identique distincte avec une multitude spécifique d'unités de récifs artificiels (1) dans ledit groupe particulier avec un type spécifique et des dimensions d'éléments structurels externes et internes de chaque unité de récif artificiel (1), qui comprennent des orifices externes qui conduisent à des cavités plus petites et plus grandes (10) et (11), des orifices traversants (7), des fentes borgnes (9), des compartiments internes ouverts (8), etc., où lesdits éléments structurels définissent l'attractivité desdites unités de récifs artificiels (1) dudit groupe particulier de récifs artificiels (20) pour l'installation d'organismes benthiques et bentho-pélagiques spécifiquement ciblés, compatibles avec lesdits éléments structurels externes et internes desdits récifs artificiels (1) dans le groupe particulier (20), où l'installation successive de groupes de récifs artificiels (20) avec des unités de récifs artificiels (1), qui ont une complexité structurelle distincte variable le long de l'itinéraire de plongée (22) de l'oasis artificielle, assurent la diversification de la distribution de la biodiversité marine.

10. Oasis artificielle sous-marine pour plongée récréative selon la revendication 8 ou 9, **caractérisée en ce qu'**elle comprend des éléments de simulations de sculptures naturelles ou artificielles (27) le long des itinéraires de plongée (22) aménagés à l'intérieur de la section espacée (ABCD).
